# EUROPÄISCHE PATENTSCHRIFT

(11) **EP 4 102 173 B1**
(45) Veröffentlichungstag und Bekanntmachung des Hinweises auf die Patenterteilung: **23.08.2023**
(21) Anmeldenummer: 21177908.7
(22) Anmeldetag: 07.06.2021
(51) Int. Cl.: G01B 5/252, G01B 21/04, G01B 3/22

(54) **VERFAHREN ZUR POSITIONIERUNG EINES KÖRPERS MIT EINER WINKELSKALIERUNG**
METHOD FOR POSITIONING A BODY WITH AN ANGLE SCALE
PROCÉDÉ DE POSITIONNEMENT D'UN CORPS DOTÉ D'UNE ÉCHELLE ANGULAIRE

(43) Veröffentlichungstag der Anmeldung: 14.12.2022
(73) Patentinhaber: Dr. Johannes Heidenhain GmbH, 83301 Traunreut (DE)
(72) Erfinder: BARTLECHNER, Alois, 83349 Palling (DE); GRUBER, Sebastian, 84375 Kirchdorf (DE); HERTENBERGER, Jürgen, 84155 Bodenkirchen (DE); SÄNDIG, Karsten, 83349 Palling (DE)

(56) Entgegenhaltungen:
- EP-A1- 0 792 059
- WO-A1-2006/114602
- CN-A- 101 166 954
- CN-A- 110 553 570

## Beschreibung

### BEZEICHNUNG DER ERFINDUNG

Verfahren zur Positionierung eines Körpers mit einer Winkelskalierung

### GEBIET DER TECHNIK

Die Erfindung betrifft ein Verfahren zur Positionierung beziehungsweise zum zentrischen Justieren eines Körpers mit einer Winkelskalierung gemäß dem Anspruch 1, wie er insbesondere als Maßverkörperung in Winkelmesssystemen einsetzbar ist.

Derartige Winkelmesssysteme dienen insbesondere zur Vermessung von Drehbewegungen bzw. Drehstellungen eines Maschinenteils, etwa einer Welle. Die Drehbewegung wird dabei entweder inkremental oder absolut erfasst. Der ausgegebene Messwert ist z. B. eine Folge von Zählimpulsen, ein Zählerwert oder ein Codewort. Entsprechende Winkelmesssysteme werden insbesondere in Werkzeugmaschinen für die Vermessung von Schwenkbewegungen eingesetzt, wo die absolute Genauigkeit der Messergebnisse eines Winkelmesssystems von großer Bedeutung ist. Die Ergebnisse der Vermessung können dann in Korrekturverfahren verwendet werden, die beispielsweise in einer Steuerung der Werkzeugmaschine durchgeführt werden.

Die Genauigkeit einer Winkelmessung wird wesentlich durch die Güte der Winkelskalierung und durch die Exzentrizität der Winkelskalierung zur eigentlichen Drehachse beeinflusst.

### STAND DER TECHNIK

Aus dem Dokument CN 110553570 A ist ein Verfahren zur Minimierung der relativen Verkippung zweier Wellen bekannt. Dabei werden zwei axial zueinander und um 180° versetzte Messuhren an einer Wellenkupplung angesetzt. Jede Messuhr liefert zwei Abstandswerte. Unter Berücksichtigung der relevanten axialen Hebellängen in Verbindung mit den gemessenen Abstandswerten wird ein Wert für eine Hebung oder eine Senkung von Auflagerfüßen zur Reduzierung einer Fluchtungsabweichung der Wellen berechnet.

In der Offenlegungsschrift EP 3 453 487 A1 ist ein Verfahren zum konzentrischen Positionieren zweier Maschinenteile an einer Werkzeugmaschine beschrieben. Bei jenem Verfahren wird eine einzelne Messuhr verwendet, die in mehrere Messpositionen um eine Achse herum geschwenkt wird. Die an den mehreren Messpositionen ermittelten Messwerte werden so verrechnet, dass Informationen bereitgestellt werden wie eine Pinole zu verschieben beziehungsweise zu schwenken ist bis diese bezüglich der Achse zentriert angeordnet ist.

Dieses Verfahren weist den Nachteil auf, dass die Messuhr exakt auf einer Kreislinie konzentrisch um die Achse bewegt werden muss.

### ZUSAMMENFASSUNG DER ERFINDUNG

Der Erfindung liegt die Aufgabe zugrunde, ein Verfahren zur Positionierung eines Körpers mit einer Winkelskalierung zu schaffen, welches sich insbesondere dadurch auszeichnet, dass ein einfacher und präziser Anbau des Körpers möglich ist, auch wenn der Körper beziehungsweise die Winkelskalierung bei der Justierung nicht um volle 360° drehbar ist.

Diese Aufgabe wird durch ein Verfahren gemäß Anspruch 1 gelöst.

Demnach weist ein Körper eine Winkelskalierung auf und eine entlang eines Kreisbogens verlaufende Mantelfläche. Das erfindungsgemäße Verfahren dient zur Positionierung des Körpers und umfasst folgende Schritte:
Befestigen des Körpers an einem um eine ortsfeste Achse schwenkbaren Maschinenteil;
Anbringen beziehungsweise Montieren eines ortsfesten ersten Abstandsmessers, so dass ein erster Abstandswert zwischen einem ersten ortsfesten Punkt und einem Punkt auf der Mantelfläche des Körpers bestimmbar ist.
Anbringen beziehungsweise Montieren eines ortsfesten zweiten Abstandsmessers , so dass ein zweiter Abstandswert zwischen einem zweiten ortsfesten Punkt und einem weiteren Punkt auf der Mantelfläche des Körpers bestimmbar ist. Dabei ist der erste Abstandsmesser relativ zum zweiten Abstandsmesser bezüglich der Mantelfläche des Körpers in Umfangsrichtung um einen Winkel versetzt angeordnet;
Bestimmen von drei ersten Abstandswerten durch den ersten Abstandsmesser in drei definierten voneinander unterschiedlichen Winkelstellungen des Maschinenteils. (Insbesondere gleichzeitiges) Bestimmen von drei zweiten Abstandswerten in drei Winkelstellungen des Maschinenteils. In diesem Verfahrensschritt wird das Maschinenteil definiert in die jeweilige Winkelstellung geschwenkt, so dass Abstandswerte für drei auf der Mantelfläche befindlichen Paaren von Punkten gemessen werden.
Berechnen eines ersten Offset-Wertes auf Basis der drei ersten Abstandswerte und der zugehörigen Winkelstellungen sowie eines zweiten Offset-Wertes auf Basis der drei zweiten Abstandswerte und der Winkelstellungen.
Verschieben des Körpers relativ zum Maschinenteil und zwar so weit und in einer Weise bis innerhalb zulässiger Abweichungen sowohl durch den ersten Abstandsmesser der erste Offset-Wert als auch durch den zweiten Abstandsmesser der zweite Offset-Wert ausgegeben beziehungsweise bestimmt wird.

Das Attribut "ortsfest" steht hierfür unbeweglich, insbesondere kann "ortsfest" eine relative Unbeweglichkeit bezüglich des Maschinenfundaments des Maschinenteils bedeuten.

Die Abstandswerte stellen den Abstand zwischen Punkten auf der Mantelfläche und jeweils einen ortsfesten Punkt dar. Als Mantelfläche kann insbesondere die äußere Fläche eines zylindrischen Körpers verstanden werden. Im Fall eines hohlzylindrischen beziehungsweise eines ringförmigen Körpers kann auch die innenliegende konkave Fläche, die entlang eines Kreisbogens verläuft, als Mantelfläche verstanden werden.

Mit Vorteil ist der Körper ringförmig ausgestaltet. Im Folgenden muss der Körper nicht zwingend eine um 360° umlaufende Mantelfläche aufweisen. Vielmehr kann der Körper eine offene Gestalt aufweisen, beispielsweise als ein Ringsegment ausgestaltet sein, so dass die Mantelfläche nicht vollständig umlaufend ist.

In weiterer Ausgestaltung der Erfindung weist der Körper an seiner Mantelseite die Winkelskalierung auf.

Vorteilhafterweise ist das Verfahren anzuwenden, wenn die Schwenkbarkeit des Maschinenteils auf einen Winkelbereich begrenzt ist, der kleiner als 360°, insbesondere kleiner als 270°, insbesondere kleiner als 180° ist.

In einer weiteren Ausgestaltung des Verfahrens befinden sich die drei Winkelstellungen des Maschinenteils in einem Winkelabschnitt der sich mindestens über 33% des schwenkbaren Winkelbereichs erstreckt. Demnach sind als die drei Winkelstellungen so gewählt, dass diese in einem Winkelabschnitt der sich mindestens über 33% des Winkelbereichs erstreckt zu liegen kommen. Mit Vorteil kann sich der Winkelabschnitt mindestens über 50% des Winkelbereichs erstrecken.

Vorteilhafterweise befinden sich die drei Winkelstellungen des Maschinenteils in einem Winkelabschnitt, der sich über weniger als 180° erstreckt, insbesondere über weniger als 100° erstreckt.

Mit Vorteil beträgt der Winkel, um welchen der erste Abstandsmesser relativ zum zweiten Abstandsmesser bezüglich der Mantelfläche des Körpers in Umfangsrichtung versetzt angeordnet ist, mindestens 20°, vorteilhafterweise mindestens 30° oder mindestens 45°.

In einer weiteren Ausbildung der Erfindung ist der erste Abstandsmesser als ein antastendes Messgerät ausgestaltet. Alternativ oder ergänzend ist der zweite Abstandsmesser als ein antastendes Messgerät ausgestaltet. Das Antastende Messgerät kann insbesondere als eine Messuhr oder ein messender Taster ausgestaltet sein. Derartige Geräte weisen in der Regel einen Messbolzen auf, der verschieblich im Gehäuse des Abstandsmessers beziehungsweise der Messuhr gelagert ist. Das Anbringen beziehungsweise Montieren der beiden Abstandsmesser wird so vorgenommen, dass die Längsachsen der Messbolzen in Richtung der zweiten Achse, um welche das Maschinenteil schwenkbar ist, ausgerichtet sind.

Alternativ zu einem antastenden Messgerät kann der erste Abstandsmesser und / oder der zweite Abstandsmesser als ein kontaktfreies Abstands-Messgerät ausgestaltet sein.

Wenn das erfindungsgemäße Verfahren abgeschlossen ist, ist der Körper mit der Winkelskalierung präzise justiert beziehungsweise zentriert, so dass der Anbau in dieser Position die Voraussetzung für eine Winkelmessung hoher Güte erfüllt.

Die Erfindung ist nicht auf Körper beschränkt, welche zylindrisch oder ringförmig ausgestaltet sind. Beispielsweise kann der Körper auch als Ringsegment ausgebildet sein, zumal häufig die Drehstellung des Maschinenteils ohnehin nicht über eine volle Umdrehung des Maschinenteils gemessen wird.

Die Erfindung weist insbesondere den Vorteil auf, dass die Positionierung für den Anwender eines derartigen Winkelmessgerätes wesentlich vereinfacht ist, so dass der entsprechende Anwender beispielsweise nicht über eine komplexe Montageausrüstung verfügen muss, insbesondere auch dann nicht wenn die Schwenkbarkeit des Maschinenteils auf einen vergleichsweise kleinen Winkelbereich begrenzt ist.

Vorteilhafte Ausführungsformen des erfindungsgemäßen Verfahrens sind aus den Maßnahmen in den vom Anspruch 1 abhängigen Ansprüchen zu entnehmen.

Weitere Vorteile, sowie Einzelheiten des erfindungsgemäßen Verfahrens ergeben sich aus der nachfolgenden Beschreibung eines Ausführungsbeispiels anhand der beiliegenden Figuren.

### KURZE BESCHREIBUNG DER ZEICHNUNGEN

- Figur 1: eine Ansicht der Abstandsmesser und des Körpers zu Beginn des Positioniervorgangs,
- Figur 2: ein Diagramm mit den gemessenen Abstandswerten und den berechneten Offset-Werten,

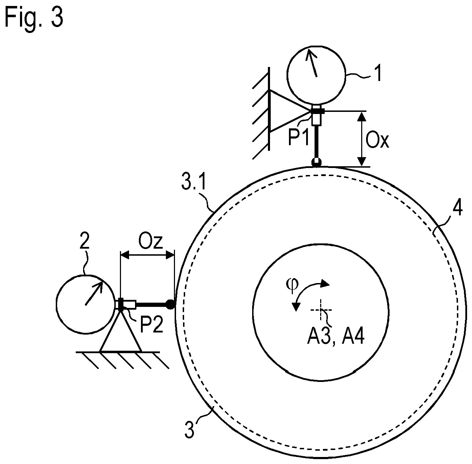

- Figur 3: eine Ansicht der Abstandsmesser und des Körpers am Ende des Positioniervorgangs.

### BESCHREIBUNG DER AUSFÜHRUNGSFORMEN

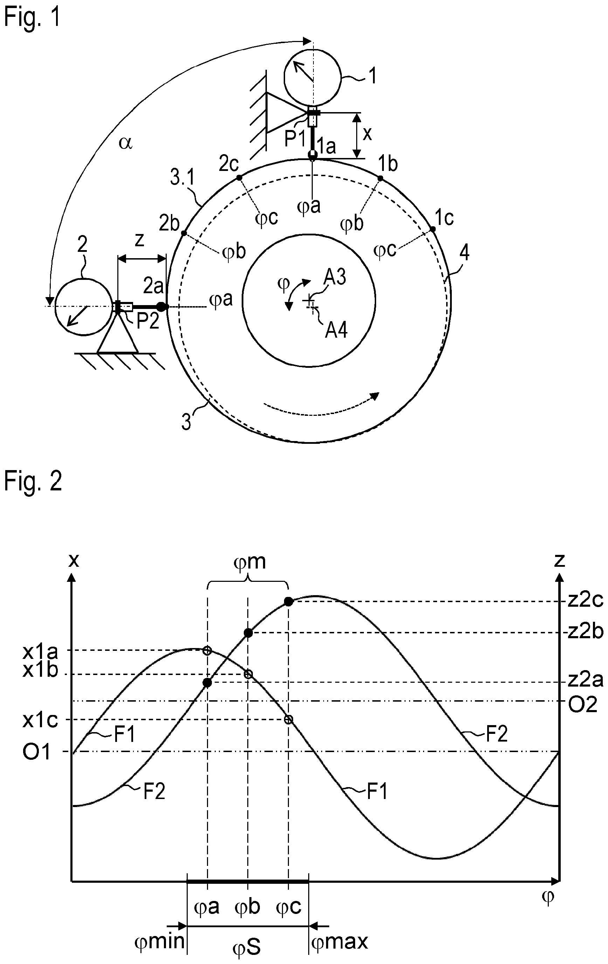

Gemäß der Figur 1 soll ein Körper 3, der hier als ein Ringkörper ausgestaltet ist, an einem Maschinenteil 4 befestigt und zentriert werden. Der Körper 3 ist mit Hilfe eines Dreh- oder Schleifverfahrens präzise gefertigt, so dass die Mantelfläche 3.1 überaus genau entlang eines Kreisbogens um eine erste Achse A3 verläuft. Auf der Mantelfläche 3.1 ist eine Winkelskalierung aufgebracht. Im vorgestellten Ausführungsbeispiel handelt es sich um eine optisch auslesbare Winkelskalierung mit reflektierenden Strichen und nicht-reflektierenden Strichen. Der Körper 3 gehört zu einem modularen Winkelmesssystem, wobei die Winkelskalierung abgetastet und ein hochgenauer Wert einer Winkelstellung ermittelt werden kann.

Das Maschinenteil 4 kann zum Beispiel eine Welle eines Schwenktisches einer Werkzeugmaschine sein. Das Maschinenteil 4 ist um eine zweite Achse A4 um einen Winkel ϕ schwenkbar, wobei im vorgestellten Ausführungsbeispiel das Maschinenteil 4 nur in einem maximalen auslenkbaren Winkelbereich ϕS (Figur 2) von 90° schwenkbar ist. Definitionsgemäß ist die zweite Achse A4 ortsfest. Mit Hilfe des Körpers 3 mit der Winkelskalierung soll die Genauigkeit der Schwenkkinematik überprüft und quantitativ erfasst werden. Die Werkzeugmaschine weist davon unabhängig eine Winkelmesseinrichtung auf, die die Winkelstellung des Maschinenteils 4 bezogen auf die zweite Achse A4 messen kann.

Im Zuge der Montage des Körpers 3 wird zunächst der Körper 3 am schwenkbaren Maschinenteil 4 befestigt. Hier wird der Körper 3 durch eine in den Figuren nicht dargestellte angefederte Schraubverbindung so am Maschinenteil 4 festgemacht, dass dieser sicher relativ zum Maschinenteil 4 fixiert ist, aber dennoch mit vergleichsweise geringen Kraftaufwand in einer Ebenen senkrecht zur Achse A4 verschoben werden kann. Nach dieser ersten Fixierung liegen die erste Achse A3 und die zweite Achse A4 im Allgemeinen nicht übereinander, so dass der Körper 3 mit einer gewissen Exzentrizität relativ zur zweiten Achse A4 beziehungsweise zum Maschinenteil 4 angeordnet ist. Beim Zusammenbau eines derartigen modularen Winkelmesssystems beim Anwender muss auf eine exakte Positionierung des Körpers 3 an dem dafür vorgesehenen Maschinenteil 4 geachtet werden.

Im nächsten Schritt wird ein erster Abstandsmesser 1 ortsfest in der Nähe der Mantelfläche 3.1 so angebracht, dass durch diesen ein erster Abstandswert x zwischen der Mantelfläche 3.1 des Körpers 3 und einem ersten ortsfesten Punkt P1 bestimmbar ist. Der erste Abstandsmesser 1 ist im vorgestellten Ausführungsbeispiel eine Messuhr oder ein so genannter Messtaster. Mit einem derartigen Abstandsmesser 1 können Abstände beziehungsweise Abstandsänderungen in einer Auflösung im Mikrometerbereich bestimmt werden.

Bezüglich der Mantelfläche 3.1 des Körpers 3 in Umfangsrichtung um einen Winkel α (hier beträgt α = 90°) und relativ zum ersten Abstandsmesser 1 versetzt wird ein zweiter Abstandsmesser 2 ortsfest angebracht. Der zweite Abstandsmesser 2 ist so platziert, dass ein zweiter Abstandswert z zwischen einem zweiten ortsfesten Punkt P2 und der Mantelfläche 3.1 des Körpers 3 bestimmt werden kann. Auch der zweite Abstandsmesser 2 ist im vorgestellten Ausführungsbeispiel als eine Messuhr ausgestaltet und weist die gleiche hohe Messgenauigkeit auf wie der erste Abstandsmesser 1.

Darauffolgend wird der Körper 3 in eine Stellung gemäß der Figur 1 gebracht. Demnach wird in dieser Stellung, die auch durch die Winkelstellung cpa definiert werden kann, durch den ersten Abstandsmesser 1 der Abstandswert x1a zwischen dem ersten ortsfesten Punkt P1 und einem Punkt 1a auf der Mantelfläche 3.1 bestimmt. Gleichzeitig wird durch den zweiten Abstandsmesser 2 der Abstandswert z1a zwischen dem zweiten ortsfesten Punkt P2 und einem weiteren Punkt 2a auf der Mantelfläche 3.1 bestimmt. Danach wird das Maschinenteil 4 samt Körper 3 um die zweite Achse A4 um einen vorgegebenen Winkel, hier 30° geschwenkt. Der Schwenkwinkel ϕ kann beispielsweise mit Hilfe der ohnehin vorhandenen Winkelmesseinrichtung der Werkzeugmaschine mit hinreichender Genauigkeit bestimmt werden. In dieser zweiten Winkelstellung ϕb werden die Abstandswerte x1b, z2b zu den Punkten 1b und 2b ermittelt. Dann wird das Maschinenteil 4 mit dem Körper 3 abermals um die zweite Achse A4 um einen vorgegebenen Winkel, geschwenkt, der im vorgestellten Ausführungsbeispiel wieder 30° beträgt. In dieser Position befindet sich das Maschinenteil 4 mit dem Körper 3 in der dritten Winkelstellung cpc werden. Auch in dieser Position werden Abstandswerte x1c, z2c bestimmt.

Alternativ zur Verwendung einer Winkelmesseinrichtung können auf dem Körper 3 oder auf dem Maschinenteil 4 Markierungen in definierten und bekannten Winkelabständen aufgebracht sein, welche dann sukzessive angefahren werden können.

Es wird also in jeder Winkelstellung cpa, cpb, cpc ein Paar von Abstandswerten x1a, z2a; x1b, z2b; x1c; z2c bestimmt.

Nach diesen Messungen wurden also sowohl drei erste Abstandswerte x1a, x1b, x1c als auch drei zweite Abstandswerte z2a, z2b, z2c in drei definierten voneinander unterschiedlichen Winkelstellungen cpa, cpb, cpc des Maschinenteils 4 bestimmt. Insbesondere liegen gemäß dem Ausführungsbeispiel folgende Informationen vor:

| Winkelstellung | erster Abstandswert | zweiter Abstandswert |
|---|---|---|
| ϕa = 0° | x1a = 2495 µm | z2a = 2182 µm |
| ϕb = 30° | x1b = 2276 µm | z2b = 2651 µm |
| ϕc = 60° | x1c = 1852 µm | z2c = 2948 µm |

Die drei Winkelstellungen (ϕa, ϕb, ϕc des Maschinenteils 4 befinden sich in einem Winkelabschnitt ϕm, der sich hier über 60° erstreckt (siehe die Figur 2). Mit anderen Worten ist die maximale Differenz zwischen zwei Winkelstellungen ϕa, ϕb, ϕc die Differenz ϕc - ϕa = cpm. Diese Differenz beträgt 60° ϕb-ϕa = 30° und somit kleiner als ϕc - ϕa). Wie bereits oben erwähnt, ist die Schwenkbarkeit des Maschinenteils 4 auf einem Winkelbereich ϕS = 90° begrenzt, dieser erstreckt sich gemäß der Figur 2 zwischen den End-Winkelstellungen ϕmin und ϕmax (ϕS = ϕmax - ϕmin). Die drei Winkelstellungen cpa, cpb, ϕc des Maschinenteils 4 befinden sich im Winkelabschnitt ϕm von 60°, so dass sich dieser über 66,67% des Winkelbereichs ϕS erstreckt (ϕm/ϕS = 60°/90° = 66,67%).

Auf Basis der ersten Abstandswerte x1a, x1b, x1c und der Winkelstellungen ϕa, ϕb, ϕc wird mit Hilfe einer Regressionsrechnung eine erste Sinusfunktion F1 bestimmt (Figur 2). Ebenso wird mit dem gleichen Verfahren auf Basis der zweiten Abstandswerte z2a, z2b, z2c und der Winkelstellungen ϕa, ϕb, ϕc eine zweite Sinusfunktion F2 bestimmt. Für die erste Sinusfunktion F1 kann ein erster Offset-Wert O1 berechnet werden und für die zweite Sinusfunktion F2 ein zweiter Offset-Wert O2. Die Offset-Werte O1, O2 entsprechen den jeweiligen Null-Linien der beiden Sinusfunktionen F1, F2. Demnach schließen die Sinusfunktionen F1, F2 oberhalb des jeweils zugehörigen Offset-Wertes O1, O2 und unterhalb des zugehörigen Offset-Wertes O1, O2 jeweils gleich große Flächen ein, wobei diese Betrachtung, wie in der Figur 2 gezeigt, für eine volle Periode der jeweiligen Sinusfunktion F1, F2 anwendbar ist.

Im vorgestellten Ausführungsbeispiel wurden folgende Offset-Werte O1, O2 ermittelt:

| | | |
|---|---|---|
| Offset-Werte | O1 = 1511 µm | O2 = 2009 µm |

Nun wird der Körper 3 relativ zum Maschinenteil 4 so verschoben (beispielsweise durch Klopfen mit einem geeigneten Werkzeug), dass die Anzeigen der Abstandsmesser 1, 2 Werte anzeigen, die sich den Offset-Werten O1, O2 nähern. Bei dem Verfahren ist es für den Bediener vergleichsweise einfach die zielführende Verschieberichtung zu erkennen. Sobald beide aktuellen Abstandswerte infolge des Verschiebens des Körpers 3 innerhalb zulässiger Abweichungen den Offset-Werten O1, O2 entsprechen, ist der Körper mit ausreichender Genauigkeit bezogen auf die zweite Achse A4 zentriert. In dieser Position kann nun der Körper 3 fest und unverschieblich mit dem Maschinenteil 4 verbunden werden, beispielsweise durch eine Schraubverbindung.

Schließlich können die Abstandsmesser 1, 2 wieder entfernt werden und es kann mit Hilfe des exakt positionierten Körpers 3 mit der Winkelskalierung eine exakte Vermessung der Kinematik der Werkzeugmaschine am Ort des Maschinenteils 4 vorgenommen werden.

## Patentansprüche

1. Verfahren zur Positionierung eines Körpers (3), der eine entlang eines Kreisbogens verlaufende Mantelfläche (3.1) aufweist und eine Winkelskalierung umfasst mit folgenden Schritten:
▪ Befestigen des Körpers (3) an einem Maschinenteil (4), das um eine ortsfeste Achse (A4) schwenkbar ist,
▪ Anbringen eines ortsfesten ersten Abstandsmessers (1), so dass ein erster Abstandswert (x) zwischen einem ersten ortsfesten Punkt (P1) und der Mantelfläche (3.1) des Körpers (3) bestimmbar ist,
▪ Anbringen eines ortsfesten zweiten Abstandsmessers (2), so dass ein zweiter Abstandswert (z) zwischen einem zweiten ortsfesten Punkt (P2) und der Mantelfläche (3.1) des Körpers (3) bestimmbar ist, wobei der erste Abstandsmesser (1) relativ zum zweiten Abstandsmesser (2) bezüglich der Mantelfläche (3.1) des Körpers (3) in Umfangsrichtung um einen Winkel (α) versetzt angeordnet ist,
▪ Bestimmen von sowohl drei ersten Abstandswerten (x1a, x1b, x1c) als auch von drei zweiten Abstandswerten (z2a, z2b, z2c) in drei definierten voneinander unterschiedlichen Winkelstellungen (cpa, cpb, cpc) des Maschinenteils (4),
▪ Berechnen eines ersten Offset-Wertes (O1) auf Basis der drei ersten Abstandswerte (x1a, x1b, x1c) und der zugehörigen Winkelstellungen (cpa, cpb, cpc) sowie eines zweiten Offset-Wertes (O2) auf Basis der drei zweiten Abstandswerte (z2a, z2b, z2c) und der zugehörigen Winkelstellungen (cpa, cpb, cpc),
▪ Verschieben des Körpers (3) relativ zum Maschinenteil (4) bis innerhalb zulässiger Abweichungen durch den ersten Abstandsmesser (1) der erste Offset-Wert (O1) bestimmt wird und durch den zweiten Abstandsmesser (2) der zweite Offset-Wert (O2) bestimmt wird.

2. Verfahren gemäß dem Anspruch 1, wobei die Schwenkbarkeit des Maschinenteils (4) auf einem Winkelbereich (ϕS) begrenzt ist, der kleiner als 360° ist, insbesondere kleiner als 270°.

3. Verfahren gemäß einem der vorhergehenden Ansprüche, wobei die Schwenkbarkeit des Maschinenteils (4) auf einen Winkelbereich (ϕS) begrenzt ist und sich die drei Winkelstellungen (ϕa, ϕb, ϕc) des Maschinenteils (4) in einem Winkelabschnitt (ϕm) befinden, der sich mindestens über 33% des Winkelbereichs (ϕS) erstreckt.

4. Verfahren gemäß einem der vorhergehenden Ansprüche, wobei sich die drei Winkelstellungen (ϕa, ϕb, ϕc) des Maschinenteils (4) in einem Winkelabschnitt (ϕm) befinden, der sich über weniger als 180° erstreckt.

5. Verfahren gemäß einem der vorhergehenden Ansprüche, wobei der Winkel (α) mindestens 20° beträgt.

6. Verfahren gemäß einem der vorhergehenden Ansprüche, wobei der erste Abstandsmesser (1) und / oder der zweite Abstandsmesser (2) als ein antastendes Messgerät ausgestaltet ist.

7. Verfahren gemäß einem der vorhergehenden Ansprüche, wobei der Körper (3) ringförmig ausgestaltet ist.

8. Verfahren gemäß einem der vorhergehenden Ansprüche, wobei der Körper (3) an seiner Mantelseite (3.1) die Winkelskalierung aufweist.

## Claims

1. Method for positioning a body (3) which has a lateral surface (3.1) extending along a circular arc and comprises an angle scale, having the following steps:
• fixing the body (3) to a machine part (4) which can be pivoted about a stationary axis (A4),
• attaching a stationary first distance gauge (1), so that a first distance value (x) between a first stationary point (P1) and the lateral surface (3.1) of the body (3) can be determined,
• attaching a stationary second distance gauge (2), so that a second distance value (z) between a second stationary point (P2) and the lateral surface (3.1) of the body (3) can be determined, wherein with respect to the lateral surface (3.1) of the body (3), the first distance gauge (1) is arranged to be offset by an angle (α) in the circumferential direction relative to the second distance gauge (2),
• determining both three first distance values (x1a, x1b, x1c) and three second distance values (z2a, z2b, z2c) in three defined mutually different angular positions (ϕa, ϕb, ϕc) of the machine part (4),
• calculating a first offset value (01) on the basis of the three first distance values (x1a, x1b, x1c) and the associated angular positions (ϕa, ϕb, ϕc) and a second offset value (O2) on the basis of the three second distance values (z2a, z2b, z2c) and the associated angular positions (ϕa, ϕb, ϕc),
• displacing the body (3) relative to the machine part (4) until, within permissible deviations, the first offset value (01) is determined by the first distance gauge (1) and the second offset value (O2) is determined by the second distance gauge (2).

2. Method according to Claim 1, wherein the ability of the machine part (4) to pivot is limited to an angular range (cpS) which is less than 360°, in particular less than 270°.

3. Method according to one of the preceding claims, wherein the ability of the machine part (4) to pivot is limited to an angular range (cpS) and the three angular positions (ϕa, ϕb, ϕc) of the machine part (4) are located in an angular segment (ϕm) which extends at least over 33% of the angular range (ϕS).

4. Method according to one of the preceding claims, wherein the three angular positions (ϕa, ϕb, ϕc) of the machine part (4) are located in an angular segment (ϕm) which extends over less than 180°.

5. Method according to one of the preceding claims, wherein the angle (α) is at least 20°.

6. Method according to one of the preceding claims, wherein the first distance gauge (1) and/or the second distance gauge (2) is/are configured as a contact-type measuring device.

7. Method according to one of the preceding claims, wherein the body (3) is annular.

8. Method according to one of the preceding claims, wherein the body (3) has the angle scale on its lateral side (3.1).

## Revendications

1. Procédé permettant de positionner un corps (3) qui présente une surface latérale (3.1) s'étendant le long d'un arc de cercle et une graduation angulaire, comprenant les étapes suivantes consistant à :
• fixer le corps (3) à une pièce de machine (4) qui peut pivoter autour d'un axe stationnaire (A4),
• installer un premier dispositif de mesure de distance stationnaire (1) de sorte qu'une première valeur de distance (x) entre un premier point stationnaire (P1) et la surface latérale (3.1) du corps (3) peut être déterminée,
• installer un deuxième dispositif de mesure de distance (2) stationnaire de sorte qu'une deuxième valeur de distance (z) entre un deuxième point stationnaire (P2) et la surface latérale (3.1) du corps (3) peut être déterminée, dans lequel le premier dispositif de mesure de distance (1) est disposé de manière décalée d'un angle (α) dans la direction circonférentielle relativement au deuxième dispositif de mesure de distance (2) par rapport à la surface latérale (3.1) du corps (3),
• déterminer aussi bien trois premières valeurs de distance (x1a, x1b, x1c) que trois deuxièmes valeurs de distance (z2a, z2b, z2c) en trois positions angulaires (ϕa, ϕb, ϕc) de la pièce de machine (4), différentes les unes des autres,
• calculer une première valeur de décalage (01) sur la base des trois premières valeurs de distance (x1a, x1b, x1c) et des positions angulaires associées (ϕa, ϕb, ϕc) ainsi qu'une deuxième valeur de décalage (O2) sur la base des trois deuxièmes valeurs de distance (z2a, z2b, z2c) et des positions angulaires associées (ϕa, ϕb, ϕc),
• décaler le corps (3) relativement à la pièce de machine (4), jusqu'à ce que la première valeur de décalage (01) soit déterminée par le premier dispositif de mesure de distance (1) dans la limite d'écarts admissibles et que la deuxième valeur de décalage (O2) soit déterminée par le deuxième dispositif de mesure de distance (2).

2. Procédé selon la revendication 1, dans lequel la capacité de pivotement de la pièce de machine (4) est limitée à une plage angulaire (ϕS) qui est inférieure à 360°, en particulier inférieure à 270°.

3. Procédé selon l'une quelconque des revendications précédentes, dans lequel la capacité de pivotement de la pièce de machine (4) est limitée à une plage angulaire (ϕS) et les trois positions angulaires (ϕa, ϕb, ϕc) de la pièce de machine (4) se trouvent dans un secteur angulaire (cm) qui s'étend sur au moins 33 % de la plage angulaire (ϕS).

4. Procédé selon l'une quelconque des revendications précédentes, dans lequel les trois positions angulaires (ϕa, ϕb, ϕc) de la pièce de machine (4) se trouvent dans un secteur angulaire (cm) qui s'étend sur moins de 180°.

5. Procédé selon l'une quelconque des revendications précédentes, dans lequel l'angle (α) mesure au moins 20°.

6. Procédé selon l'une quelconque des revendications précédentes, dans lequel le premier dispositif de mesure de distance (1) et/ou le deuxième dispositif de mesure de distance (2) est/sont configuré(s) comme un appareil de mesure à contact.

7. Procédé selon l'une quelconque des revendications précédentes, dans lequel le corps (3) est configuré en forme d'anneau.

8. Procédé selon l'une quelconque des revendications précédentes, dans lequel le corps (3) présente la graduation angulaire sur sa surface latérale (3.1).
